(19) **Europäisches Patentamt / European Patent Office / Office européen des brevets**

(11) **EP 2 221 743 B1**

(12) **EUROPEAN PATENT SPECIFICATION**

(45) Date of publication and mention
of the grant of the patent:
**17.04.2013 Bulletin 2013/16**

(51) Int Cl.:
***G06K 7/00*** *(2006.01)*     ***G06K 7/10*** *(2006.01)*

(21) Application number: **10250269.7**

(22) Date of filing: **17.02.2010**

(54) **Radio-frequency tag communication device**

Hochfrequenzetikett-Kommunikationsvorrichtung

Dispositif de communication d'étiquette de fréquence radio

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **18.02.2009 JP 2009035925**

(43) Date of publication of application:
**25.08.2010 Bulletin 2010/34**

(73) Proprietor: **Brother Kogyo Kabushiki Kaisha
Nagoya-shi, Aichi-ken 467-8561 (JP)**

(72) Inventor: **Hirata, Hironori
Nagoya-shi
Aichi-ken 467-8561 (JP)**

(74) Representative: **Smith, Samuel Leonard
J A Kemp
14 South Square
Gray's Inn
London WC1R 5JJ (GB)**

(56) References cited:
**DE-U1-202006 017 474**     **US-A1- 2005 200 528**
**US-A1- 2007 194 929**     **US-A1- 2007 279 192**
**US-A1- 2008 042 846**

**Description**

BACKGROUND OF THE INVENTION

Field of the Invention

The present invention relates to a radio-frequency tag communication device configured to perform communication with a radio-frequency tag capable of writing and reading information over radio communication, and more particularly, to a technology for suppressing a failure in reading out the radio-frequency tag.

Description of the Related Art

A Radio Frequency Identification (hereinafter referred to as "RFID") system has heretofore been known with a structure in which a predetermined radio-frequency tag communication device (interrogator) reads information from a radio-frequency tag (responder) which is a small-sized responder storing predetermined information, in a non-contact fashion. The RFID system can read out information from the radio-frequency tag over radio communication with the radio-frequency tag communication device even where the radio-frequency tag is or located at an invisible place. For such a reason, the RFID system is expected to be put into practical use in various fields such as management of commodities and an inspection process.

Meanwhile, in an usual practice, the radio-frequency tag communication device performs communication of information with the radio-frequency tag by transmitting a predetermined transmission signal (carrier wave) to the radio-frequency tag using a transmitting antenna, and by receiving a reply signal (reflected wave) replied from the radio-frequency tag which has received the transmission signal using a receiving antenna. However, the radio-frequency tag communication device has a defect that sensitivity of radio communication remarkably drops depending on a relative positional relationship with the radio-frequency tag. That is, the antenna has a polarization plane which corresponds to an oscillating plane of an electric field component used in communication with a targeted radio-frequency tag, and which is likely to be perpendicular to a polarization plane associated with the relevant radio-frequency tag. In such a case, no reflection wave can be almost received.

To address such a defect, a radio-frequency tag communication device has been proposed with a structure including plural antennas allocated for a plurality of polarization planes, respectively, in which switching the plurality of polarization planes in use switches the polarization planes used in communication with the radio-frequency tag. For instance, an information terminal including an antenna device disclosed in Patent Publication 1 (JP2006-148472A) represents such an example described above.

In the conventional technology noted above, however, under a situation where for instance the targeted radio-frequency tag is frequently moved, the relevant radio-frequency tag does not necessarily stays in a readable range of the radio-frequency tag communication device for long periods of time. This leads to a possibility of failure or miss in reading out the targeted radio-frequency tag depending on a timing at which the polarization planes used in communication are switched. Thus, it has been expected to develop a radio-frequency tag communication device that can appropriately prevent the occurrence of failure in reading out a targeted radio-frequency tag.

US2007/0279192 discloses an RFID system, which has a reader/writer main unit and a polarization-switchable antenna and which transmits a continuous carrier wave, and a tag which modulates the continuous carrier wave with tag information and returns a response signal to the reader/writer; the reader/writer main unit judges the level of a received interference signal, determines a polarization direction for which the level of the interference signal is equal to or less than a threshold, transmits a command signal to the tag with a polarization direction different from the polarization direction thus determined, and receives a response signal from the tag to the command signal with the polarization direction thus determined. This prior art is acknowledged in the preamble of independent claim1.

US2005/0200528 discloses a patch antenna including a patch coupled to a ground plane. The ground plane includes a first and second strip line. When the first strip line is activated, the antenna generates a signal having a first polarization, and when the second strip line is activated, the antenna generates a second polarization.

US2008/0042846 discloses an antenna for a radio frequency identification (RFID) system and a method for communicating in an RFID system. The antenna includes a first port configured to provide RFID communication in a first polarization plane and a second port configured to provide RFID communication in a second polarization plane. The first polarization plane is orthogonal to the second polarization plane.

SUMMARY OF THE INVENTION

The present invention has been completed with the above view in mind and has an object to provide a radio-frequency tag communication device that can appropriately prevent the occurrence of failure in reading out a targeted radio-frequency tag.

According to a first aspect of the present invention there is provided a radio-frequency tag communication device, having an antenna operative to switch polarization planes used in communication, and configured to execute the communication of information with a radio-frequency tag, including transmission of data to and reception of data from a radio-frequency tag, and to execute a control to switch the polarization planes of the antenna during the communication, the radio-frequency tag communication device being characterized by comprising:

a polarization-plane switching control portion configured to switch the polarization planes of the antenna within a time interval that is within one-third of an estimated time period preliminarily set in which a targeted radio-frequency tag stays in a communication field; and
a communication control portion configured to control at least one of a frequency, a modulating system, a response wait time and a commands order relevant to the communication such that the communication in association with a command group to execute a series of communications with plural radio-frequency tags selected in response to a predetermined selection command, including transmission of data to and reception of data from said plural radio-frequency tags, is completed once within said time interval in which the polarization-plane switching control portion switches the polarization planes of the antenna.

According to the radio-frequency tag communication device of the first aspect, the polarization-plane switching control portion operates to switch the polarization planes of the antenna within one-third of the time period preliminarily set in which the targeted radio-frequency tag stays in the communication field, and the communication control portion controls at least one of the frequency, the modulating system, the response wait time and the commands order relevant to the communication such that the communication in association with the command group to execute the series of communications with plural radio-frequency tags selected in response to the predetermined selection command is completed within the time interval in which the polarization-plane switching control portion switches the polarization planes of the antenna.

Thus, an algorithm is determined such that a switch timing of the relevant polarization plane is switched to allow the targeted radio-frequency tag to present in the communication field during a period for the polarization planes of the antenna to be switched twice, and to complete the series of communications with all of the plural radio-frequency tags selected during the period for the polarization planes to be switched. This algorithm can reliably read out the plural radio-frequency tags. That is, a radio-frequency tag communication device that can appropriately prevent the failure in reading out the targeted radio-frequency tag can be provided.

In the first aspect of the present invention, preferably, when no communication in association with the command group to execute the series of communications with the plural radio-frequency tags selected in response to the predetermined selection command is completed within the time interval in which the polarization-plane switching control portion switches the polarization planes of the antenna, the communication control portion alters at least one of the frequency, the modulating system, the response wait time and the commands order relevant to the communication in a subsequent communication. With such configuration, the algorithm can be optimized to complete the series of communications with all of the plural radio-frequency tags selected during the period for the polarization planes of the antenna to be switched, so that the plural radio-frequency tags can be reliably read out.

Preferably, a communication time determining portion determines whether the communication in association with the command group for executing the series of communications with the plural radio-frequency tags selected in response to the predetermined selection command falls in the time interval in which the polarization-plane switching control portion switches the polarization planes of the antenna by altering at least one of the frequency, the modulating system, the response wait time and the commands order relevant to the communication, when no communication in association with the command group to execute the series of communications with the plural radio-frequency tags selected in response to the predetermined selection command is completed within the time interval in which the polarization-plane switching control portion switches the polarization planes of the antenna, and an alarm output control portion outputs an alarm indicative of an incapability of optimizing the communication time when an answer of the communication time determining portion is negative.

With such a configuration, possibility for optimizing the algorithm so as to complete the series of communications with all of the plural radio-frequency tags selected during the period for the polarization planes of the antenna to be switched is determined. When achieving the optimization is impossible, then, such a notification can be sent to a user.

Preferably, an alarm output control portion outputs an alarm indicative of an occasion in which no communication in association with the command group to execute the series of communications with the plural radio-frequency tags selected in response to the predetermined selection command is not completed within the time interval in which the polarization-plane switching control portion switches the polarization planes of the antenna. With such a configuration, when completing the series of communications with the entire radio-frequency tags selected during the period for the polarization planes of the antenna to be switched is impossible, such a notification can be sent to the user.

Preferably, the communication control portion performs a frequency hopping control for varying the frequency used in the communication with the radio-frequency tags at predetermined time intervals, and the polarization-plane switching control portion switches the polarization planes of the antenna each time when the communication control portion performs the frequency hopping control. With such a configuration, switching the polarization planes of the antenna each time when the hopping of the frequency is performed can reliably read out the targeted plural radio-frequency tags.

Preferably, a polarization-plane switching control portion operates to switch the polarization planes of the antenna each time when the communication in association with a command group to execute a series of communications with plural radio-frequency tags selected in response to a predetermined selection command is completed. With such a configuration, switching the polarization planes of the antenna at timing when all the targeted plural radio-frequency tags are read out can reliably reads out the targeted plural radio-frequency tags. That is, a radio-frequency tag communication device that can appropriately prevent the failure in reading out the targeted radio-frequency tag can be provided.

BRIEF DESCRIPTION OF THE DRAWINGS

FIG. 1 is a view illustrating a radio-frequency tag communication system to which the present invention is preferably applied.

FIG. 2 is a view illustrating a structure of radio-frequency tag circuit elements incorporated in a radio-frequency tag of the radio-frequency tag communication system shown in FIG. 1.

FIG. 3 is a view exemplarily illustrating a structure of a radio-frequency tag communication device of one embodiment according to the present invention.

FIG. 4 is a view exemplarily illustrating a protocol control bit "PC" corresponding to a system information code used in the radio-frequency tag shown in FIG. 3.

FIG. 5 is a view showing correspondence between a TRANSMIT command related to a transmission signal transmitted from the radio-frequency tag communication device over radio communication with the radio-frequency tag shown in FIG. 2, and a REPLY command related to a reply signal replied from the radio-frequency tag in response to the TRANSMIT command, during an operation of the radio-frequency tag communication device shown in FIG. 3.

FIG. 6 is a flowchart contrastingly showing a basic control executed by a DSP of the radio-frequency tag communication device, and another basic control executed by a control portion of the radio-frequency tag, which are executed in the radio-frequency tag communication device shown in FIG. 3 for communication with the radio-frequency tag shown in FIG. 2.

FIG. 7 represents a sub-routine contrastingly showing anti-collision processing executed by the control portion of the radio-frequency tag shown in FIG. 2, and a control executed by the DSP of the radio-frequency tag communication device in association with such anti-collision processing.

FIG. 8 is a flowchart illustrating a major part of a polarization plane switching control to be executed by the DSP of the radio-frequency tag communication device shown in FIG. 3.

FIG. 9 is a flowchart illustrating one example of an algorithm used in communication with targeted plural radio-frequency tags, for a communication time calculation control to be executed by the DSP of the radio-frequency tag communication device shown in FIG. 3.

FIG. 10 is a view illustrating a situation where a switching time interval by the DSP of the radio-frequency tag communication device shown in FIG. 3 to switch the polarization planes is not less than one-third of an estimated time preliminarily set in which the targeted radio-frequency tag stays in a communication field.

FIG. 11 is a view illustrating a situation where a switching time interval by the DSP of the radio-frequency tag communication device shown in FIG. 3 to switch the polarization plane is not more than one-third of the estimated time preliminarily set in which the targeted radio-frequency tag stays in the communication field.

FIG. 12 is a flowchart illustrating a major part of an algorithm adjusting control to be executed by the DSP of the radio-frequency tag communication device shown in FIG. 3.

FIG. 13 is a view illustrating a conventional mode in which no polarization plane is switched by the DSP of the radio-frequency tag communication device shown in FIG. 3, each time when a frequency hopping control is performed.

FIG. 14 is a view illustrating a mode of the present embodiment in which the polarization planes are switched by the DSP of the radio-frequency tag communication device shown in FIG. 3, each time when the frequency hopping control is performed.

FIG. 15 is a view exemplarily illustrating a rectangular patch antenna to be preferably used in the radio-frequency tag communication device according to the present invention.

FIG. 16 is a view exemplarily illustrating a circular patch antenna to be preferably used in the radio-frequency tag communication device according to the present invention.

DETAILED DESCRIPTION OF THE PREFERRED EMBODIMENTS

Now, preferred embodiments according to the present invention will be described below in detail with reference to the accompanying drawings.

[Embodiment 1]

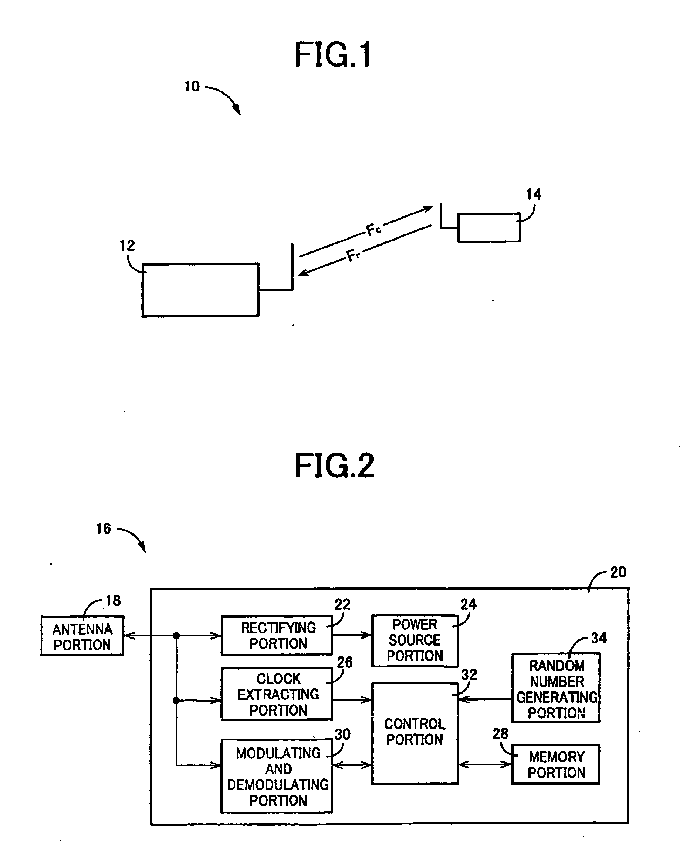

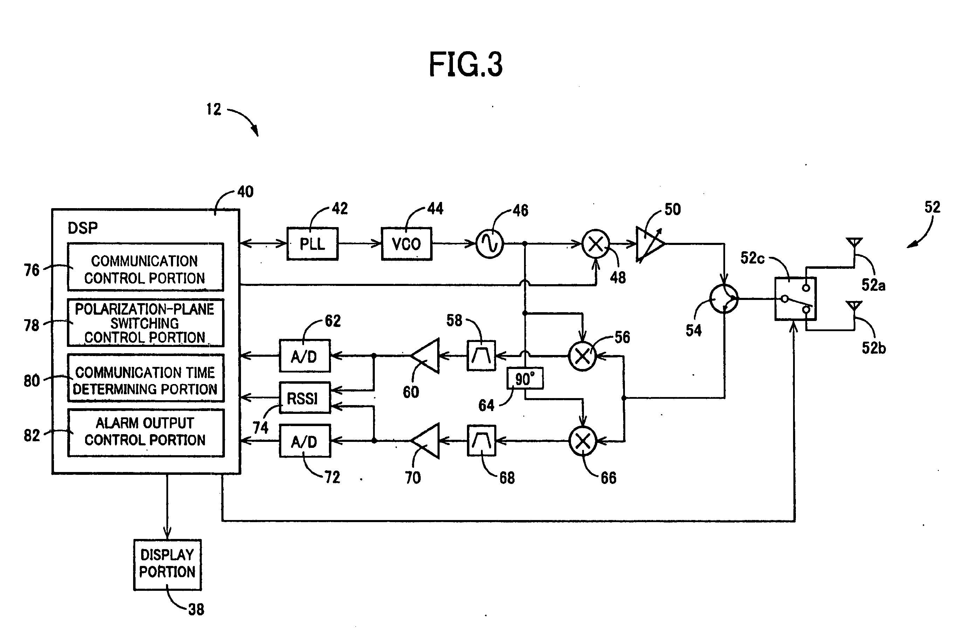

Referring to FIG. 1, there is shown a radio-frequency tag communication system 10 is a so-called RFID system including a radio-frequency tag communication device 12 which is one embodiment according to the present invention, and a single or plural targeted radio-frequency tag(s) 14 (a single targeted unit shown in FIG. 1) which is a target subject of the radio-frequency tag communication device 12. The radio-frequency tag communication device 12 functions as an interrogator of the RFID system and the radio-frequency tag 14 functions as a responder. That is, the radio-frequency tag communication device 12 transmits an interrogating wave Fc (transmission signal) to the radio-frequency tag 14. Upon receipt of the interrogating wave Fc, the radio-frequency tag 14 modulates the interrogating wave Fc by a predetermined information signal (data) to provide a response wave Fr (reply signal), which is transmitted back or replied to the radio-frequency tag communication device 12.
Thus, a communication of information between the radio-frequency tag communication device 12 and the radio-frequency tag 14 is achieved. The radio-frequency tag communication system 10 is for example for management of an article placed in a predetermined communication field. The radio-frequency tag 14 is unitarily attached to the article which is a target to be managed to provide a unitary structure. Hereunder, signals transmitted and received between the radio-frequency tag communication device 12 and the radio-frequency tag 14, and a transmitting and receiving method thereof will be described with reference to a protocol of an International Standard ISO/IEC18000-6 Type C or an EPC global Class 1 Generation2 (C1G2).
As shown in FIG. 2, a radio-frequency tag circuit element 16 includes an antenna portion 18 for achieving a transmission and receipt of signals with the radio-frequency tag communication device 12, and an IC circuit portion 20 connected to the antenna portion 18 to execute the communication and an information processing with the radio-frequency tag communication device 12. The IC circuit portion 20 functionally includes: a rectifying portion 22 for rectifying the interrogating wave Fc transmitted from the radio-frequency tag communication device 12 and received by the antenna portion 18; a power source portion 24 for storing energy of the interrogating wave Fc rectified by the rectifying portion 22; a clock extracting portion 26 for extracting a clock signal from a carrier wave received at the antenna portion 18 for supply to a control portion 32; a memory portion 28 having a function to serve as an information storage portion to store a predetermined information signal; a modulating and demodulating portion 30 connected to the antenna portion 18 for performing modulation and demodulation of the signals; a control portion 32 for controlling the operation of the radio-frequency tag circuit element 16 via the rectifying portion 22, the clock extracting portion 26 and the modulating and demodulating portion 30; and a Random number generating portion 34 for generating a predetermined Random number related to a "Q" value or the like described later for supply to the control portion 32.
The control portion 32 executes fundamental controls including: a control of storing in the memory portion 28 predetermined information upon performing communication with the radio-frequency tag communication device 12; and a control of modulating in the modulating and demodulating portion 30 the interrogating wave Fc received at the antenna portion 18 by the information signal stored in the memory portion 28, and reflecting and responding the response wave Fr from the antenna portion 18 etc.
The radio-frequency tag communication device 12 shown in FIG. 3 is configured to communicate information with the radio-frequency tag 14 for executing at least one of the reading and writing of information to and from the radio-frequency tag 14. The radio-frequency tag communication device 12 includes a DSP (Digital Signal Processor) 40 for executing digital signal processing for the transmission signal to be output as a digital signal, and the reply signal transmitted from the radio-frequency tag 14 to be demodulated, and a display portion 38 for displaying various information used in the communication with the radio-frequency tag 14 in response to a signal supplied from the DSP 40. Further, the radio-frequency tag communication device 12 has, for transmission, a PLL (Phase Locked Loop) 42 serving as a frequency oscillator; a VCO (Voltage Controlled Oscillator) 44 serving as a self-excited oscillator that varies an oscillating frequency depending on a variation of a control voltage; a carrier wave generating portion 46 for outputting a predetermined carrier wave signal depending on a signal supplied from the VCO 44; and a transmission mixer 48 for multiplying the carrier wave signal output from the carrier wave generating portion 46, by transmission data output from the DSP 40. Furthermore, the radio-frequency tag communication device 12 has, for transmission, a transmission amplifier 50 for amplifying a modulated carrier wave signal output from the transmission mixer 48; a transmission/reception antenna portion 52 operative to transmit the modulated carrier wave signal output from the transmission amplifier 50 to the radio-frequency tags 14 as the interrogating wave Fc, and to receive the response wave Fr replied from the radio-frequency tag 14 depending on the interrogating wave Fc; and a transmission-reception separating portion 54 operative to supply the modulated carrier wave signal output from the transmission amplifier 50 to the transmission/reception antenna portion 52, and to supply the received signal received at the transmission/reception antenna portion 52 to receiving mixers 56 and 66.

Further, the radio-frequency tag communication device 12 has, for reception, an I-phase mixer 56 for multiplying the received signal supplied from the transmission-reception separating portion 54 by the carrier wave signal output from the carrier wave generating portion 46; an I-phase filter 58 operative to pass among signals output from the I-phase mixer 56, a signal laying in a predetermined frequency band; an I-phase amplifier 60 for amplifying the signal output from the I-phase filter 58; an I-phase A/D converting portion 62 for converting an I-phase signal (inphase component) output from the I-phase amplifier 60 for supply to the DSP 40; and a phase-shifting portion 64 for altering the carrier wave signal output from the carrier wave generating portion 46 by a phase of 90°.

Moreover, the radio-frequency tag communication device 12 has, for reception, a Q-phase mixer 66 for multiplying the received signal supplied from the transmission-reception separating portion 54, by a carrier wave signal having a phase supplied from the phase-shifting portion 64 and is altered by 90°; a Q-phase filter 68 operative to pass among the signals output from the Q-phase mixer 66, the signal laying in the predetermined frequency band; a Q-phase amplifier 70 for amplifying the signal output from the Q-phase filter 68; a Q-phase A/D converting portion 72 for amplifying a Q-phase signal (orthogonal component) output from the Q-phase amplifier 70 for supply to the DSP 40; and an RSSI (Received Signal Strength Indicator) 74 for detecting a signal intensity of the received signal based on the I-phase signal output from the I-phase amplifier 60, and the Q-phase signal output from the Q-phase amplifier 70 for supply to the DSP 40.

Further, the transmission/reception antenna portion 52 is comprised of: a first transmission/reception antenna 52a associated with a predetermined polarization plane; a second transmission/reception antenna 52b associated with another polarization plane (such as, for instance, a polarization plane orthogonal to that of the first transmission/reception antenna 52a) different from that of the first transmission/reception antenna 52a; and a circuit switching portion 52c for selectively connecting either one of the first and second transmission/reception antennas 52a and 52b to the transmission-reception separating portion 54 in response to a command signal supplied from the DSP 40.

The DSP 40 is a so-called microcomputer, including a CPU composed of a Central Processing Unit, a ROM composed of a Read Only Memory and a RAM composed of a Random Access Memory, etc., which performs signal processing in accordance with programs preliminarily stored in the ROM with utilizing a temporary storage function of the RAM. As shown in FIG. 3, the DSP 40 includes, as a control function to communicate the information with the radio-frequency tag 14, a communication control portion 76, a polarization-plane switching control portion 78, a communication time determining portion 80 and an alarm output control portion 82. Hereunder, these control functions will be individually described.

The communication control portion 76 controls the transmission /reception of information between the radio-frequency tag communication device 12 and the radio-frequency tag 14. That is, the communication control portion 76 performs a transmission control to cause the PLL 42, the VCO 44 and the carrier wave generating portion 46 or the like to generate a carrier wave signal, and to multiply the carrier wave signal by predetermined transmission data to provide the transmission signal for transmission from the transmission/reception antenna portion 52 to the radio-frequency tag 14. Meanwhile, the communication control portion 76 executes a reception control to execute modulation and demodulation processing of the received signal received at the transmission/reception antenna 52 replied from the radio-frequency tag 14 in response to the transmission signal. In addition, the polarization-plane switching control portion 78 switches the polarization planes of the transmission/reception antenna 52 for the transmission and reception thereof. That is, the polarization-plane switching control portion 78 executes a circuit switching control via the circuit switching portion 52c for connecting either one of the first and second transmission/reception antennas 52a and 52b to the transmission-reception separating portion 54.

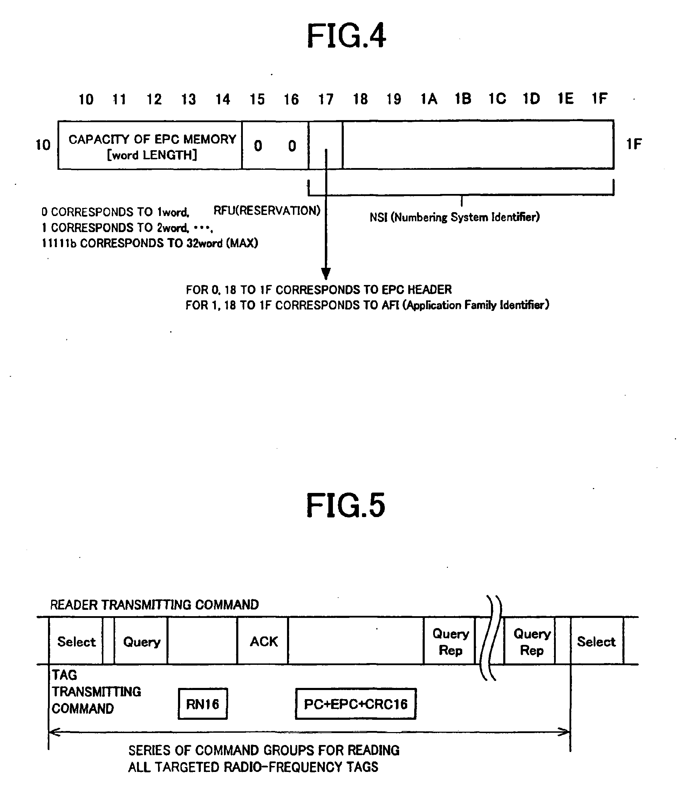

As shown in FIGS. 4 and 5, during the communication of the radio-frequency tag communication device 12 with the radio-frequency tag 14, the communication control portion 76 of the radio-frequency tag communication device 12 transmits a "Select" command, i.e., a transmission signal associated with a series of command groups beginning with a selected command to the radio-frequency tag 14 which is a target or subject for the communication. Then, the targeted radio-frequency tag 14 transmits a transmission signal (response signal) associated with the predetermined command as a response signal (in reply) to the radio-frequency tag communication device 12.

That is, during the communication of the radio-frequency tag communication device 12 with the radio-frequency tag 14, the communication control portion 76 of the radio-frequency tag communication device 12 transmits the transmission signal associated with the "Select" command to the radio-frequency tags 14 as shown in FIG. 5. The "Select" command represents a command by which a predetermined ID matching a condition of an ID (identifying information) of each radio-frequency tag 14 is designated to set or to raise a flag. Upon receipt of the "Select" command, each radio-frequency tag 14 determines as to whether an own ID matches the condition of the "Select" command. Upon determination that the own ID matches the relevant condition, the flag is set or raised.

Next, the communication control portion 76 of the radio-frequency tag communication device 12 transmits a transmission signal associated with a "Query" command to the radio-frequency tag 14. The "Query" command represents a command for requesting anti-collision to the radio-frequency tag 14. Upon receipt of the "Query" command, a Random number (= Q-value) generated by the Random number generating portion 34 not more than $2^Q$ based on a Q-set value designated in the "Query" command is given to each radio-frequency tag 14. The radio-frequency tag 14 with the Q-value being zeroed transmits (replies) "RN16", i.e., a response signal associated with the Random number in 16 bits to the radio-frequency tag communication device 12 (in reply).

Subsequently, the communication control portion 76 of the radio-frequency tag communication device 12 transmits a transmission signal associated with an "Ack" command to a radio-frequency tag 14 from which a response signal associated with "RN16" is transmitted in reply. The "Ack" command is a command for reading out the ID of the radio-frequency tag 14. Upon receipt of the "Ack" command, the radio-frequency tag 14 transmits (in reply) response signals associated with "PC" corresponding to a system information code of the relevant tag, "EPC" corresponding to the "ID" of the relevant tag and "CRC16" corresponding to a symbol indicating an error, respectively, to the radio-frequency tag communication device 12.

Then, the communication control portion 76 of the radio-frequency tag communication device 12 transmits a transmission signal associated with a "QueryRep" command to the radio-frequency tag 14. The "QueryRep" command is a command for requesting anti-collision to the radio-frequency tag 14 with a decrease in the "Q" value. In the respective radio-frequency tags 14 receiving the "QueryRep" command, "RN16", i.e., the response signal associated with the Random number with 16 bits is transmitted (in reply) from the radio-frequency tag 14 with the "Q" value being zeroed, to the radio-frequency tag communication device 12. The communication in association with the "QueryRep" command is repeatedly performed by $2^Q$-1 times. Thus, when no collision occurs, the series of command groups are completed for reading out the respective ID of all the radio-frequency tags 14 selected in response to the "Select" command.

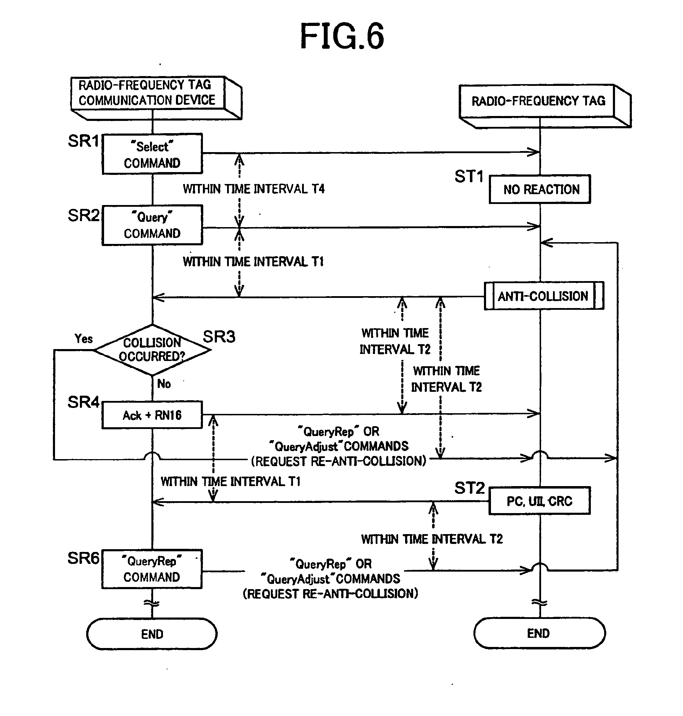

At step SR1 (hereinafter, term "step" will be omitted) of FIG. 6, first, the radio-frequency tag communication device 12 transmits the transmission signal associated with the "Select" command. Depending on the transmission signal transmitted at SR1, in the radio-frequency tag 14, at ST1, with no response signal replied (with no reaction) whether the own ID matches with a condition of the "Select" command is determined. If a determination is made that the own ID matches with the relevant condition, then, a flag is set. By such communication, an unconfirmed tag is narrowed down with using the flag.

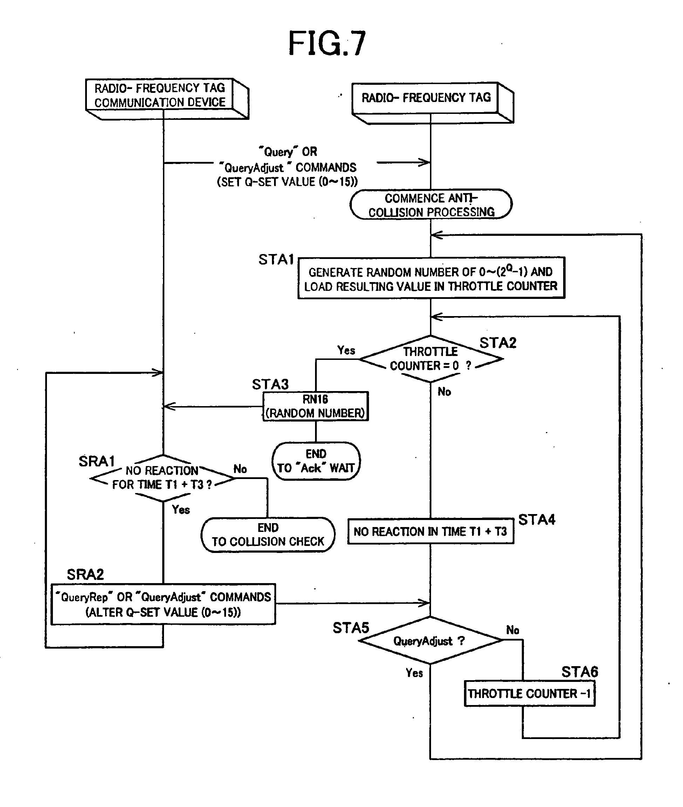

At succeeding SR2, the transmission signal associated with the "Query" command is transmitted from the radio-frequency tag communication device 12. Depending on the transmission signal transmitted at SR2, the radio-frequency tag 14 performs anti-collision processing shown in FIG. 7, and for instance the response signal associated with "RN16" is transmitted (replied) as the information related to anti-collision processing, to the radio-frequency tag communication device 12.

At subsequent SR3, whether a collision occurs in the radio-frequency tag communication device 12 is determined. If the determination in SR3 is positive, then, the transmission signals associated with the "QueryRep" command or the "Query Adjust" command are transmitted to the radio-frequency tag 14 for requesting re-anti-collision. Then, the radio-frequency tag 14 executes anti-collision processing shown in FIG. 7, again. If the determination in SR3 is negative, then, at SR4, a transmission signal associated with a "Ack+RN16" command is transmitted from the radio-frequency tag communication device 12. Depending on the transmission signal transmitted at SR4, the radio-frequency tag 14 transmits (replies) in ST2 the response signals associated with "PC", "EPC" and "CRC16" to the radio-frequency tag communication device 12.

In order to request re-anti-collision, at next SR6, the radio-frequency tag communication device 12 transmits the transmission signals associated with the "QueryRep" command or the "Query Adjust" command to the radio-frequency tag 14, upon which the anti-collision processing shown in FIG. 7 is executed again in the radio-frequency tag 14. If no collision occurs, then, the communication associated with the "QueryRep" command is repeatedly performed $2^Q$-1 times. Thus, the series of command groups to read out the respective ID of all the radio-frequency tags 14 selected at SR1 in response to the "Select" command, is completed.

Next, the anti-collision processing executed by the control portion 32 of the radio-frequency tag 14 and the control executed by the DSP 40 of the radio-frequency tag communication device 12 in association with such anti-collision processing will be explained with reference to Fig. 7. At SR2 or the like shown in FIG. 6, first, the radio-frequency tag communication device 12 transmits the transmission signal associated with the "Query" command or the "Query Adjust" command, upon which the Q-set value (0 to 15) is set. The radio-frequency tag 14 begins the anti-collision processing in response to such a transmission signal. At STA1, the Random number generating portion 34 of the radio-frequency tag 14 generates the Random number (Q-value) with 0 to $2^Q$-1, and this value is loaded in a throttle counter. Next at STA2, whether a value of the throttle counter of the radio-frequency tag 14 is zero is determined. If the determination in STA2 is positive, then, at STA3, the radio-frequency tag 14 transmits (replies) the response signal associated with "RN16" as information related to the anti-collision processing to the radio-frequency tag communication device 12, after which the current sub-routine is terminated.

Depending on the response signal associated with "RN16" transmitted at STA3, the radio-frequency tag communication device 12 determines at SRA1 whether no reaction is present or continued for a predetermined time interval T1 + T3. If the determination in SRA1 is negative, then, the current sub-routine is terminated. If the determination in SRA1 is positive, then, at SRA2, the radio-frequency tag communication device 12 transmits the transmission signal associated with the "QueryRep" command or the "Query Adjust" command to the radio-frequency tag 14, after which the processing subsequent to SRA1 are executed again.

If the determination in STA2 is negative, then, at STA4, it is regarded that no reaction is present for the predetermined time interval T1 + T3. At succeeding STA5, whether the radio-frequency tag communication device 12 receives the transmission signal associated with the "Query Adjust" command transmitted from the radio-frequency tag 14 is determined. If the determination in STA5 is positive, then, the processing subsequent to STA1 are executed again. If the determination in STA5 is negative, then, at STA6, the value of the throttle counter of the radio-frequency tag 14 is set to "-1", after which the processing subsequent to STA2 are executed again.

Turning back to FIG. 3, the polarization-plane switching portion 78 incorporated in the DSP 40 of the radio-frequency tag communication device 12, performs the control to switch the polarization plane of the transmission/reception antenna portion 52. The communication control portion 76 begins communication starting with the "Select" command. Subsequently, the communication is executed corresponding to the series of the command groups for reading out all the radio-frequency tags 14 selected in response to the "Select" command as set forth above with reference to FIG. 5.

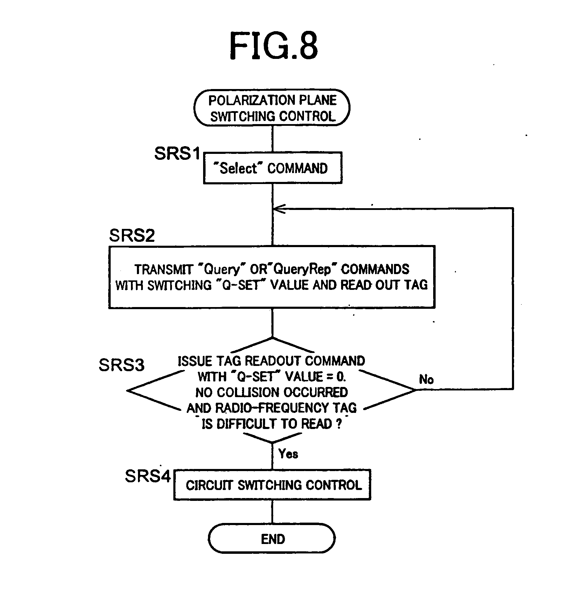

In a flowchart shown in FIG. 8, which may, in some examples, be in accordance with the invention as defined in the claims, for illustrating a major part of the polarization plane switching control executed by the DSP 40 of the radio-frequency tag communication device 12, the polarization plane switching control is repeatedly executed by a predetermined cycle.

At SRS1 of FIG. 8, first, the transmission signal associated with the "Select" command is transmitted to the radio-frequency tag 14. At subsequent SRS2, the transmission signals associated with the "Query" command or the "QueryRep" command are sequentially transmitted to the radio-frequency tag 14 with switching the Q-set value. At SRS3, next, a readout command associated with Q-set value being zero, is transmitted upon which a whether no collision occurs and the radio-frequency tag 14 can not be read out in the communication related to such transmission is determined. If the determination in SRS3 is negative, then, the processing subsequent to SRS2 are executed again. If the determination in SRS3 is positive, then, at SRS4 corresponding to the operation of the polarization-plane switching control portion 78, the circuit switching control using the circuit switching portion 52c is executed. That is, the other (disconnected at that timing) of the first and second transmission/reception antennas 52a and 52b is connected to the transmission-reception separating portion 54 by the circuit switching portion 52c, after which the current routine is terminated. In the foregoing control, SRS1 to SRS3 correspond to the operation of the communication control portion 76.

[Embodiment 2]

Subsequently, a detailed description will be provided of another mode of the communication control by the radio-frequency tag communication device 12 with the radio-frequency tags 14, i.e., another preferred embodiment according to the present invention. In the following description, further, parts common to the above embodiment are added like reference numerals to omit description thereof.

In the present embodiment, the communication time determining portion 80 incorporated in the DSP 40 of the radio-frequency tag communication device 12 as shown in FIG. 3, determines (calculates) a time period required for completing the communication associating with a predetermined selected command, that is the command groups for performing the series of communications with the plural radio-frequency tags 14 selected by the "Select" command once. That is, a communication time determining portion 80 calculates the estimated time required for the beginning of the series of the command groups to the completion thereof. The calculation is accomplished based on the transmitting frequency, the receiving frequency, the modulating system, the tag response wait time, the algorithm for determining an order of the command groups, and the number (required for giving an initial setting of the algorithm) of radio-frequency tag 14 which is the communication object. Hereunder, detailed description will be provided of a communication time calculating control to be executed by the communication time determining portion 80 under a condition indicated below. However, "Frame-Sync" and "Preamble" etc. are different depending on concrete conditions, and hence, approximate values are illustrated for these conditions. Further, the time per 1 bit of transmission has lengths differing with "0" and "1", and hence, what is calculated consistently represents an estimated value. In addition, if the concrete conditions are fixed, the calculation mode incorporating such conditions may be conceived.

[Condition]

RFID Standard: EPC global C1G2, or ISO/IEC18000-6 Type C
Number of tags estimated in readable range: $N_{Tag} \rightarrow$ Determine Q-set value: $Q_{start}$ Transmission bit rate: $T_{X\_rate} \rightarrow$ Time per 1 bit: $T_{TX}$
Receiving bit rate: $R_{X-rate} \rightarrow$ Time per 1 bit: $T_{RX}$
Tag response wait time: $T_{wait}$

"Select" command: $T_{Select}$ : 44bit + 4bit (Frame - Sync) = 48bit

"Query" command: $T_{Query}$ : 22bit + 8bit (Preamble) = 30bit

"QueryRep" command: $T_{QueryRep}$ : 4bit + 4bit (Frame - Sync) = 8bit

"Ack" command: $T_{Ack}$ : 18bit + 4bit (Frame - Sync) = 22bit

RN16: $T_{RN16}$: 16bit + 17bit (Preamble and delimiter) = 33bit

PC+EPC+CRC: $T_{PC+EPC+CRC}$: 128bit+17bit (Preamble and delimiter) = 145bit

Time Interval from reader command to tag command: $T_{Tagwake}$: $2T_{TX}$

Time Interval for reader to send subsequent reader command: $T_{wait} > 4T_{TX}$

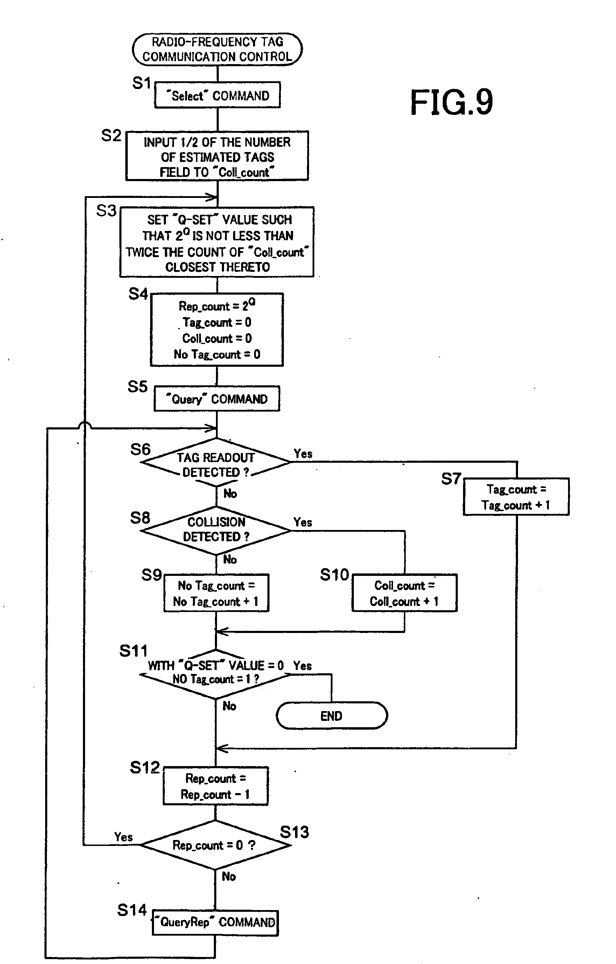

In relation to a communication time calculation control executed by the communication time determining portion 80, the algorithm shown in FIG. 9, executed by the DSP 40 of the radio-frequency tag communication device 12 in communication with the plural radio-frequency tags 14, is repeatedly executed by a predetermined cycle.

At S1, first, the transmission signal associated with the "Select" command is transmitted. At S2, next, 1/2 of the estimated number of tags (the number of sheets) placed in the field or area is input to "Coll_count". At S3, subsequently, the Q-set value is set such that $2^Q$ is not less than twice of the count of "Coll_count" and has a value closest thereto. At succeeding S4, "Rep_count" is set to $2^Q$, and all of "Tag_count", "Coll_count" and "No Tag_count" are set to "0". At subsequent S5, the transmission signal associated with the "Query" command is transmitted. At succeeding S6, whether a predetermined tag 14 is read out and detected is determined. If the determination in S6 is positive, then, at S7, "1" is added to "Tag_count", after which the processings subsequent to S12 are executed. If the determination in S6 is negative, then, at S8, whether a collision is detected is determined. If the determination in S8 is negative, then, at S9, "1" is added to "No Tag_count", after which the processing subsequent to S11 are executed. If the determination in S8 is positive, after, at S10, "1" is added to "Coll_count", at S11, whether Q is "0" and "No Tag_count" is "1" is determined. If the determination in S11 is positive, then, the current routine is terminated. If the determination in S11 is negative, then, at S12, "1" is subtracted from "Rep_count". At subsequent S 13, whether "Rep_count" is "0" is determined. If the determination in S13 is positive, then, the processing subsequent to S3 are executed again. If the determination in S 13 is negative, then, at S 14, the transmission signal associated with the "QueryRep" command is transmitted, after which the processing subsequent to S6 are executed again.

The estimated time required will be considered for completing the communication in association with the command group once for performing the series of communications with the plural radio-frequency tags 14 selected in response to the "Select" command in the algorithm shown in FIG. 9, under the condition set forth above. As the calculation condition for the estimated time, suppose that a half of the radio-frequency tags 14 encounter collisions in communication performed in response to the "Query" command at once. The Q-set value is decreased by one each time when the communication is performed in associated with such a "Query" command once.

The radio-frequency tag 14 is required to have times other than the time required for response, which include times to issue the "Select" command once, the "Query" command for $Q_{start}$ times and the "QueryRep" command for $\Sigma Q_{start}$ n=0 $2^n$ times. Further, the radio-frequency tag 14 is required for response to have times to issue "RN16" the "Ack" command and "PC+EPC+CRC, for $N_{tag}$ times with the number of tags estimated to be present in a readable range. To express the times described above using a formula, the estimated time $T_{commands}$, required for completing the communication in association with the command group for performing the series of communications with the plural radio-frequency tags 14 selected in response to the "Select" command once, can be expressed in a formula (1) indicated below. Using a time per transmission with "1" bit and a time per reception with "1" bit, further, the estimated time $T_{commands}$ can be expressed by a formula (2) indicated below. With a manner set forth above, the communication time determining portion 80 calculates the estimated time $T_{commands}$ required for completing the communication in association with the command group for performing the series of communications with the radio-frequency tags 14 selected in response to the "Select" command once.

$$T_{commands} = T_{Select} + Q \times (T_{Query}) + \Sigma Q_{n=0} \, 2^n \times (T_{QueryRep} + T_{wait})$$
$$+ N_{Tag} \times (2 \times T_{Tagwake} + T_{RN16} + T_{Ack} + T_{PC+EPC+CRC}) \qquad \ldots(1)$$

$$T_{commands} = T_{TX} \times 48 + Q \times (T_{TX} \times 30) + \Sigma \, Q_{n=0} \, 2^n \times (T_{TX} + T_{wait})$$
$$+ N_{Tag} \times (T_{TX} \times 26 + T_{RX} \times 178) \qquad \ldots(2)$$

With the present embodiment, the polarization-plane switching control portion 78 incorporated in the DSP 40 of the radio-frequency tag communication device 12 switches the polarization plane of the transmission/reception antenna portion 52, at every elapse of the estimated time $T_{commands}$. The estimate time $T_{commands}$ is not more than 1/3 of the estimated time $T_{Stay}$ with the targeted radio-frequency tags 14 staying in the communication field, and allows a series of transmission and reception to be performed with the plural radio-frequency tags 14 selected in response to the "Select" command calculated by the communication time determining portion 80. Preferably, the polarization plane of the transmission/reception antenna portion 52 is switched at every elapse of time 1/3 of the estimated time $T_{Stay}$ with the targeted radio-frequency tag 14 staying in the communication field. Further, the estimated time $T_{Stay}$ for the targeted radio-frequency tag 14 to stay in the communication field is a value that can be input by the user on consideration of the movements of the radio-frequency tags 14 within for instance the relevant communication field. Furthermore, the communication control portion 76 controls at least one of the frequency, the modulating system, the response wait time and the commands order of related to the relevant communication so that the communication, in association with the command group for performing the series of communications with the plural radio-frequency tags 14 selected in response to the "Select" command, is completed once within the time interval in which the polarization-plane switching control portion 78 switches the polarization planes of the transmission/reception antenna portion 52.

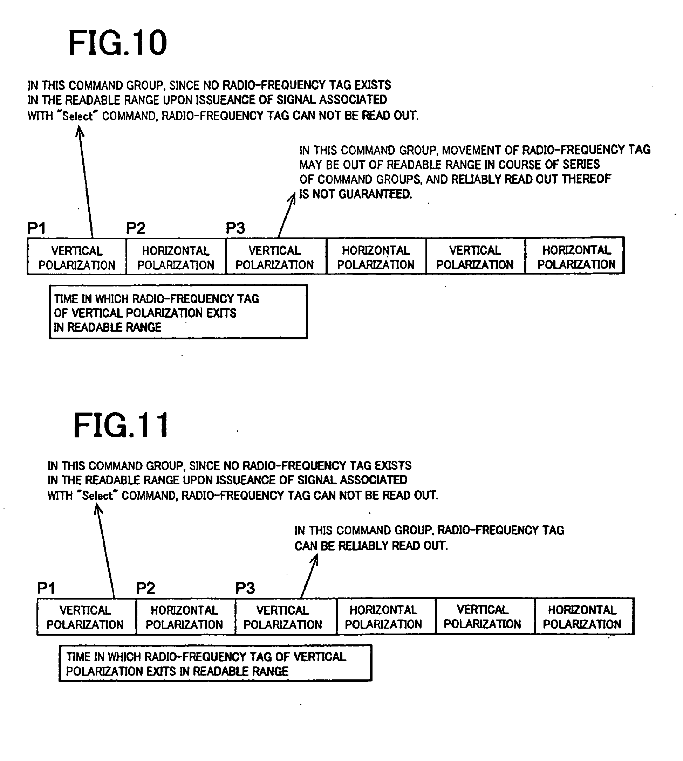

With such a mode, as shown in FIG. 10, when the signal associated with the "Select" command is issued, in the command group related to a communication period P1, there exits no targeted radio-frequency tag 14 in the readable range (communication field), during a communication period P1 related to a vertical polarization. According, there is no possibility for such radio-frequency tag 14 to be read out. Further, the communication period P1 is contiguous to a communication period P2 associated with a horizontal polarization, to which a communication period P3 associated with the vertical polarization is contiguous again. In the command group associated with the communication period P3, the radio-frequency tag 14 may be moved out of the readable range in the course of the series of the command groups, and failed to be reliably reading out. In other words, in the mode shown in FIG. 10, there is a possibility of a failure of reading out the radio-frequency tag 14 that should be read out in response to communication related to the vertical polarization.

With such a mode, as shown in FIG. 11, when the signal associated with the "Select" command is issued, in the command group related to in the communication period P1, there exists no targeted radio-frequency tag 14 in the readable range (communication field), during the communication period P1 related to the vertical polarization. Accordingly, there is no possibility for such radio-frequency tag 14 to be read out. Further, the communication period P1 is contiguous to the communication period P2 associated with the horizontal polarization, to which the communication period P3 associated with the vertical polarization is contiguous again. During such a communication period P3, the radio-frequency tags 14 failed to be read out during the communication period P1 can be reliably read out. That is, the time interval for the polarization-plane switching control portion 78 to switch the polarization planes of the transmission/reception antenna portion 52 is controlled to be 1/3 of the preset estimated time $T_{Stay}$ with the targeted radio-frequency tag 14 staying in the communication field, so that the plural radio-frequency tags 14 located or present in the communication field are reliably read out. In addition, with setting the switching time to be 1/3 of the estimated time $T_{Stay}$ which is the longest time, the algorithm can be easily adjusted in a manner as detailed below.

Turning back to FIG. 3, there may be a case where no communication in association with the command group for performing the series of communications with the plural radio-frequency tags 14 selected by the "Select" command, is completed once within the time interval in which the polarization-plane switching control portion 78 switches the polarization planes of the transmission/reception antenna portion 52. In such a case, a subsequent communication is performed with the execution of altering operation of at least one of the frequency, the modulating system, the response wait time and the commands order, i.e. commands order related to the relevant communication. In other words, in the subsequent communication, at least one of the frequency, the modulating system, the response wait time and the commands order related to the relevant communication is altered (adjusted) so that the communication in association with the command group for performing the series of communications with the plural radio-frequency tags 14 selected by the "Select" command is completed once, within the time interval in which the polarization-plane switching control portion 78 switches the polarization planes of the transmission/reception antenna portion 52.

Further, there is a case where no communication is completed in association with the command group for performing the series of communications with the plural radio-frequency tags 14 selected by the "Select" command, within the time interval in which the polarization-plane switching control portion 78 switches the polarization planes of the transmission/reception antenna portion 52. In such a case, preferably, the communication time determining portion 80 determines whether the communication associated with the command group for performing the series of communications with the plural radio-frequency tags 14 selected by the "Select" command falls or completes within the time interval in which the polarization-plane switching control portion 78 switches the polarization planes of the transmission/reception antenna portion 52, by altering at least one of the frequency, the modulating system, the response wait time and the commands order related to the relevant communication. The communication time determining portion 80 provides a negative determination, if some of the frequency, the modulating system, the response wait time and the commands order used in communication are changed, when communication associated with the command group for performing the series of communications with the plural radio-frequency tags 14 selected by the "Select" command does not fall within the time interval in which the polarization-plane switching control portion 78 switches the polarization planes of the transmission/reception antenna portion 52.

In such a case, the alarm output control portion 82 shown in FIG. 3 preferably outputs an alarm indicating an incapability of optimizing the communication time. This alarm is of the type that can be displayed over for instance the display portion 38, but may be notified by an audio output unit (not shown) to output an audio information or the like. Further, the alarm output control portion 82 may uniformly output an alarm, when the communication associated with the command group for performing the series of communications with the plural radio-frequency tags 14 selected by the "Select" command is not completed once within the time interval in which the polarization-plane switching control portion 78 switches the polarization planes of the transmission/reception antenna portion 52.

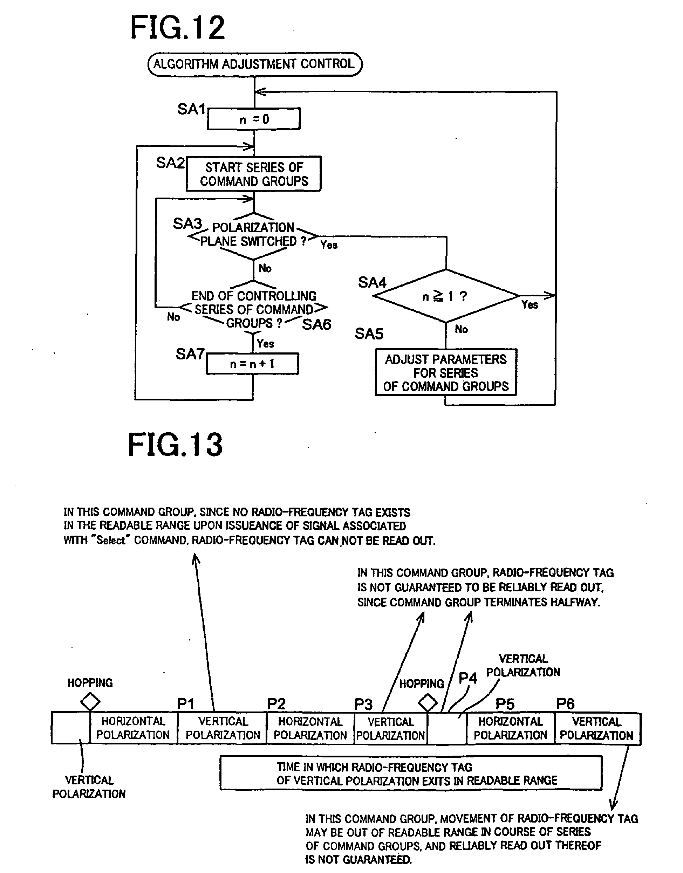

A flowchart shown in FIG. 12 representing a major part of algorithm adjustment control of the radio-frequency tag communication device 12 is repeatedly executed by a predetermined cycle.

At SA1 in FIG. 12, first, a count "n" is set to "0". At succeeding SA2, the communication control is commenced in relation to the series of the command groups starting with the "Select" command. At SA3, next, whether the switching control is executed on the polarization plane of the transmission/reception antenna portion 52 is determined. If the determination in SA3 is negative, then, the operations subsequent to SA6 are executed. If the determination in SA3 is positive, then, at SA4, whether "n" is greater than "1" is determined. If the determination in SA4 is positive, then, the operations subsequent to SA1 are executed again. If the determination in SA4 is negative, then, at SA5 corresponding to the operation of the communication time determining portion 80, the subsequent communication is performed to complete the communication associated with the command group for performing the series of communications with the plural radio-frequency tags 14 selected by the "Select" command once within the time interval in which the polarization-plane switching control portion 78 switches the polarization planes of the transmission/reception antenna portion 52, by adjusting at least one of the frequency, the modulating system, the response wait time and the commands order used in the relevant communication. Then, after which the operations subsequent to SA1 are executed again. At SA6, termination of the communication control related to the series of command groups starting with the "Select" command is determined. If the determination in SA6 is negative, then, the operations subsequent to SA3 are executed again. If the determination in SA6 is positive, then, at SA7, "1" is added to "n", and subsequently, the operations subsequent to SA2 are executed again. In the control set forth above, SA2 and SA5 correspond to the operation of the communication control portion 76.

As set forth above, according to the present embodiment, the polarization-plane switching control portion 78 is provided to switch the polarization planes of the transmission/reception antenna portion 52 at every time within one-third of the estimated time $T_{Stay}$ preliminarily set in which the targeted radio-frequency tag 14 stays in the communication field, and in which the series of transmission and reception can be executed with the plural radio-frequency tags 14 selected in response to the "Select" command. In addition, the communication control portion 76 is provided to control at least one of the frequency, the modulating system, the response wait time and the commands order relevant to the communication such that the communication in association with the command group to execute the series of communications with plural radio-frequency tags 14 selected in response to the "Select" command is completed within the time interval in which the polarization-plane switching control portion 78 switches the polarization planes of the transmission/ reception antenna portion 52.

Thus, the switching timing of the polarization plane is controlled so as to allow the targeted radio-frequency tags 14 to be present in the communication field during switching of the polarization plane of the transmission/reception antenna portion 52 twice, and the algorithm is determined to complete the series of communications with all of the plural radio-frequency tags 14 selected during switching of the polarization plane. Thus, the reliable reading-out of the plural radio-frequency tags 14 can be realized. That is, the radio-frequency tag communication device 12 that can appropriately prevent a failure of reading out the targeted radio-frequency tags 14 can be provided.

When no communication in association with the command group to execute the series of communications with the plural radio-frequency tags 14 selected in response to the "Select" command is completed within the time interval in which the polarization-plane switching control portion 78 switches the polarization planes of the transmission/reception antenna portion 52, the communication control portion 76 alters at least one of the frequency, the modulating system, the response wait time and the commands order relevant to the communication in the subsequent communication. Accordingly, the algorithm is optimized so as to complete the series of communications with all of the plural radio-frequency tags 14 selected during switching of the polarization plane of the transmission/reception antenna portion 52. Thus, the reliable reading-out of the plural radio-frequency tags 14 can be executed.

The communication time determining portion 80 is provided to determine whether the communication in association with the command group for executing the series of communications with the plural radio-frequency tags 14 selected in response to the "Select" command falls in the time interval in which the polarization-plane switching control portion 78 switches the polarization planes of the transmission/reception antenna portion 52 by altering at least one of the frequency, the modulating system, the response wait time and the commands order relevant to the communication, when no communication in association with the command group to execute the series of communications with the plural radio-frequency tags 14 selected in response to the "Select" command is completed within the time interval in which the polarization-plane switching control portion 78 switches the polarization planes of the transmission/reception antenna portion 52.

In addition, the alarm output control portion 82 is provided to output the alarm indicative of the incapability of optimizing the communication time when the answer of the communication time determining portion 80 is negative. Accordingly, whether the algorithm can be optimized so as to complete the series of communications with all of the plural radio-frequency tags 14 selected during switching of the polarization plane of the transmission/reception antenna portion 52 is determined. If such an optimization is impossible, which is notified to the user.

The alarm output control portion 82 is provided to output the alarm indicative of the occasion in which no communication in association with the command group to execute the series of communications with the plural radio-frequency tags 14 selected in response to the "Select" command is not completed within the time interval in which the polarization-plane switching control portion 78 switches the polarization planes of the transmission/reception antenna portion 52. Impossibility of completing the series of communications with all of the plural radio-frequency tags 14 selected during switching of the polarization plane of the transmission/reception antenna portion 52 can be notified to the user.

[Embodiment 3]

Description will be further provided for a still another mode of a communication control by the radio-frequency tag communication device 12 in communication with the radio-frequency tags 14 according to still another preferred embodiment of the present invention. In thus mode, like the embodiments described above, the polarization-plane switching control portion 78 incorporated in the DSP 40 of the radio-frequency tag communication device 12 switches the polarization plane of the transmission/reception antenna portion 52 at every preset time interval which is not more than 1/3 of the estimated time $T_{Stay}$ with the targeted radio-frequency tags 14 staying in the communication field, and in which the series of transmission and reception can be executed with the plural radio-frequency tags 14 selected in response to the "Select" command. Further, like the embodiments described above, the polarization-plane switching control portion 78 switches the polarization plane of the transmission/reception antenna portion 52 during the predetermined time interval, within which the communication control portion 76 controls at least one of the frequency, the modulating system, the response wait time and the commands order used in communication, such that the communication in association with the command group for performing the series of communications with the plural radio-frequency tags 14 selected in response to the "Select" command is completed once.

Further, the communication control portion 76 incorporated in the radio-frequency tag communication device 12 of the present embodiment performs a frequency hopping control for varying a frequency used in the communication with the radio-frequency tags 14 at predetermined time intervals. That is, the communication control portion 76 varies the frequency of the carrier wave used for the transmission and reception of information with the targeted radio-frequency tags 14 via the PLL 42, the VCO 44 and the carrier wave generating portion 46. Moreover, the polarization-plane switching control portion 78 incorporated in the radio-frequency tag communication device 12, controls switching of the polarization plane of the transmission/reception antenna portion 52 each time when the communication control portion 76 performs the frequency hopping control. That is, the polarization-plane switching control portion 78 using the circuit switching portion 52c executes the circuit switching control each time when the communication control portion 76 performs the frequency hopping control. Thus, the other (unconnected at that timing) of the first and second transmission/reception antennas 52a and 52b is connected to the transmission-reception separating portion 54. In addition, the communication control portion 76 preferably executes the frequency hopping control almost simultaneously at timing when the polarization-plane switching control portion 78 switches the polarization plane (not at every switching of the polarization plane).

In a mode shown in FIG. 13, during the communication period P1 related to the vertical polarization, in the command group used in the communication period P1, there exists no targeted radio-frequency tag 14 in the read-out field (communication field) when the signal associated with the "Select" command is issued, no radio-frequency tag 14 is read out. Further, the communication period P1 is contiguous to the communication period P2, to which the communication period P3 related to the vertical polarization is contiguous again. The frequency hopping tends to be initiated in the command group used in the communication period P3, before completion of the series of command groups starting with the "Select" command, so that the command group terminates halfway. There is possibility of a difficulty in reliably reading out the radio-frequency tags 14 present in the communication field.

Furthermore, even during a communication period P4 contiguous to the communication period P3 in relation to the vertical polarization, the frequency hopping is similarly performed before completion of the series of the command groups, terminating the command groups halfway. There is no guarantee that the radio-frequency tags 14 in the communication field can be reliably read out. Further, the communication period P4 is contiguous to a communication period P5 related to the horizontal polarization, to which a communication period P6 related to the vertical polarization is contiguous again. During such a communication period P6, there is possibility that the radio-frequency tags 14 move out of the readable range halfway the series of the command groups, resulting in possibility of a difficulty in reliably reading out the radio-frequency tags 14. Stated another way, in the mode shown in FIG. 13, there is possibility of a failure in reading out the radio-frequency tags 14 that should be read out in association with communication related to the vertical polarization.

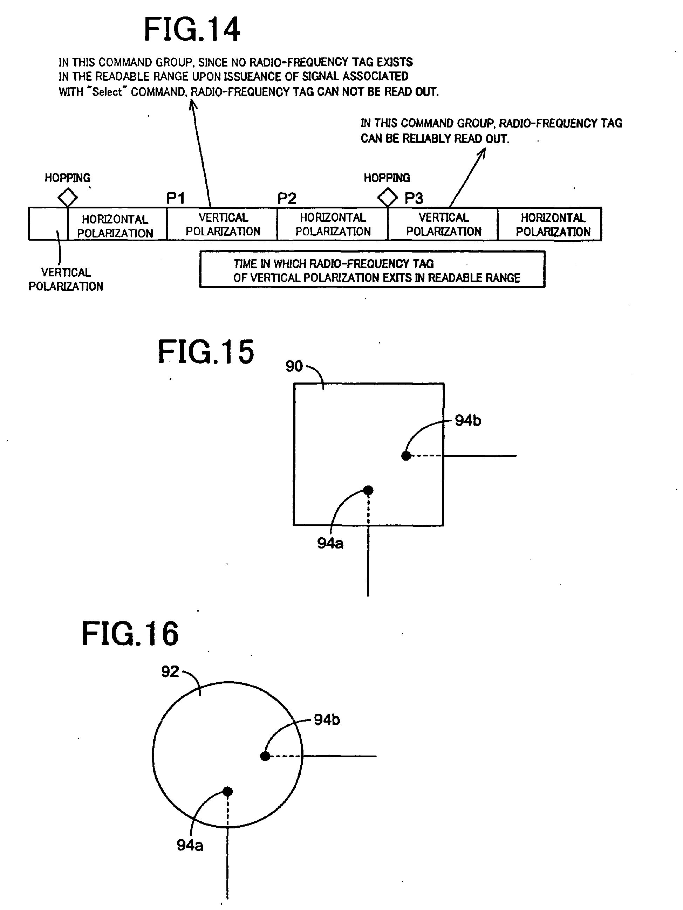

In a mode shown in FIG. 14, during the communication period P1 related to the vertical polarization, since no targeted radio-frequency tag 14 is present in the readable range (communication field) upon issuance of the signal associated with the "Select" command, no targeted radio-frequency tag 14 is read out. Moreover, the communication period P1 is contiguous to the communication period P2, to which the communication period P3 related to the vertical polarization is also contiguous. During such a communication period P3, the radio-frequency tag 14 not read out during the communication period P1 can be reliably read out. That is, controlling the switching of the polarization plane of the transmission/reception antenna portion 52 each time when the communication control portion 76 performs the frequency hopping control, allows to reliably read out the plural radio-frequency tags 14 present in the communication field.

As set forth above, according to the present embodiment, the communication control portion 76 is provided to perform the frequency hopping control for varying the frequency used in the communication with the radio-frequency tags 14 at predetermined time intervals, and the polarization-plane switching control portion 78 is provided to switch the polarization planes of the transmission/reception antenna portion 52 each time when the communication control portion 76 performs the frequency hopping control. Switching the polarization plane of the transmission/reception antenna portion 52 each time when the frequency hopping control is performed allows to reliably read out the plural targeted radio-frequency tags 14 present in the communication field.

While the present invention has been described above with reference to the preferred embodiments shown in the accompanying drawings, the present invention is not limited thereto and may be implemented in various other modes.

In the embodiments set forth above, for instance, although all of the communication control portion 76, the polarization-plane switching control portion 78, the communication time determining portion 80 and the alarm output control portion 82 are functionally incorporated in the DSP 40, the present invention is not limited to such an arrangement. For instance, a control device, individually having control functions equivalent to the communication control portion 76, the polarization-plane switching control portion 78, the communication time determining portion 80 and the alarm output control portion 82, is alternately provided separate from the DSP 40. In addition, the control operations related to these control functions may be performed in the digital signal processing or analog signal processing.

In the embodiments set forth above, further, the radio-frequency tag communication device 12 is composed of the transmission/reception antenna portion 52 including the first transmission/reception antenna 52a associated with the predetermined polarization plane, the second transmission/reception antennas 52b associated with the other polarization plane (for instance, the polarization plane orthogonal to that of the first transmission/reception antenna 52a) different from that of the first transmission/reception antenna 52a, and the circuit switching portion 52c operative to connect either one of the first and second transmission/reception antennas 52a and 52b to the transmission-reception separating portion 54 in response to the command signal transmitted from the DSP 40. Although the transmission/reception antenna portion 52 is arranged to switch the polarization plane used in the communication, by performing the selective connection of the first and second transmission/reception antennas 52a and 52b, the present invention is not limited to such an arrangement.

An alternative radio-frequency tag communication device 12 may include a rectangular patch antenna 90 formed in a squared shape (rectangular) shown in FIG. 15, or a circular patch antenna 92 shown in FIG. 16. In the rectangular patch antenna 90 shown in FIG. 15, two power supply points 94a and 94b are provided at points on line segments each connecting two facing sides of the rectangular patch antenna 90 and other than the center point of the rectangular patch antenna 90. Like the embodiments set forth above, controlling a percentage of electric power supplied to the power supply points 94a and 94b by the polarization-plane switching control portion 78, controls a polarization direction of the transmission signal transmitted from the rectangular patch antenna 90.

As shown in FIG. 16, in the circular patch antenna 92 two power supply points 94a and 94b are provided at points on two diametric lines orthogonal to each other of the circular patch antenna 92 and other than the center point of the circular patch antenna 92. Controlling a percentage of electric power supplied to the power supply points 94a and 94b by the polarization-plane switching control portion 78, controls the polarization direction of the transmission signal transmitted from the circular patch antenna 92.

Thus, even with a radio-frequency transmission device including the patch antennas 90 and 92 having the two power supply points 94a and 94b at the points other than the center points of planar antennas, the application of the present invention can arbitrarily vary the polarization direction of the transmission signals transmitted from the patch antennas 90 and 92.

The illustrated embodiments have been described above with reference to the examples in which the present invention is applied to the radio-frequency tag communication device 12 including the transmission/reception antenna portion 52 commonly used for transmitting the transmission signal and receiving the receiving signal. The present invention may also be applied to an RF communication device arranged in a mode individually including a transmitting antenna for transmission of a transmission signal and a reception antenna for reception of a receiving signal, and individually switching polarization planes of the transmitting antenna and the reception antenna, respectively.

While the illustrated embodiments have been described above with reference to the RF communication device 12 which executes no directivity control, the present invention may be preferably applied to an RF communication device that can control the communication directivity in respect of the radio-frequency tags 14 by using for instance "PAA" (Phased Array Antenna) processing and "AAA" (Adaptive Array Antenna) processing, etc.

The present invention may be implemented in various modifications without departing from the scope of the present invention as defined by the appended claims.

**Claims**

1. A radio-frequency tag communication device (12), having an antenna (52) operative to switch polarization planes used in communication, and configured to execute the communication of information with a radio-frequency tag (14), including transmission of data to and reception of data from a radio-frequency tag (14), and to execute a control to switch the polarization planes of the antenna during the communication, the radio-frequency tag communication device being **characterized by** comprising:

   a polarization-plane switching control portion (78) configured to switch the polarization planes of the antenna (52) within a time interval that is within one-third of an estimated time period preliminarily set in which a targeted radio-frequency tag (14) stays in a communication field; and
   a communication control portion (76) configured to control at least one of a frequency, a modulating system, a response wait time and a commands order relevant to the communication such that the communication in association with a command group to execute a series of communications with plural radio-frequency tags (14) selected in response to a predetermined selection command, including transmission of data to and reception of data from said plural radio-frequency tags, is completed once within said time interval in which the polarization-plane switching control portion (78) switches the polarization planes of the antenna (52).

2. The radio-frequency tag communication device according to claim 1, wherein when no communication in association with the command group to execute the series of communications with the plural radio-frequency tags (14) selected in response to the predetermined selection command is completed within the time interval in which the polarization-plane switching control portion (78) switches the polarization planes of the antenna (52), the communication control portion (76) alters at least one of the frequency, the modulating system, the response wait time and the commands order relevant to the communication in a subsequent communication.

3. The radio-frequency tag communication device according to claims 1 or 2, further comprising:

   a communication time determining portion (80) configured to determine whether the communication in association with the command group for executing the series of communications with the plural radio-frequency tags (14) selected in response to the predetermined selection command falls in the time interval in which the polarization-plane switching control portion (78) switches the polarization planes of the antenna (52) by altering at least one of the frequency, the modulating system, the response wait time and the commands order relevant to the communication, when no communication in association with the command group to execute the series of communications with the plural radio-frequency tags selected in response to the predetermined selection command is completed within the time interval in which the polarization-plane switching control portion (78) switches the polarization planes of the antenna (52); and
   an alarm output control portion (82) configured to output an alarm indicative of an incapability of optimizing a communication time when an answer of the communication time determining portion (80) is negative.

4. The radio-frequency tag communication device according to claims 1 or 2, further comprising an alarm output control portion (82) configured to output an alarm indicative of an occasion in which no communication in association with the command group to execute the series of communications with the plural radio-frequency tags (14) selected in response to the predetermined selection command is not completed within the time interval in which the polarization-plane switching control portion (78) switches the polarization planes of the antenna (52).

5. The radio-frequency tag communication device according to any one of claims 1 to 4, wherein the communication control portion (76) is configured to perform a frequency hopping control for varying the frequency used in the communication with the radio-frequency tags (14) at predetermined time intervals, and the polarization-plane switching control portion (78) is configured to switch the polarization planes of the antenna (52) each time when the communication control portion (76) performs the frequency hopping control.

**Patentansprüche**

1. Funkfrequenzetikettenkommunikationsvorrichtung (12) mit einer Antenne (52), die zum Schalten von Polarisationsebenen betreibbar ist, die bei einer Kommunikation verwendet werden, und die dazu konfiguriert ist, die Kommunikation von Informationen mit einem Funkfrequenzetikett (14) einschließlich einer Übertragung von Daten zu und einer Aufnahme von Daten von einem Funkfrequenzetikett (14) auszuführen und eine Steuerung zum Schalten der Polarisationsebenen der Antenne während der Kommunikation auszuführen, wobei die Funkfrequenzetikettenkommunikationsvorrichtung **dadurch gekennzeichnet ist, dass** sie Folgendes aufweist:

    einen Polarisationsebenen-Schaltsteuerabschnitt (78), der dazu konfiguriert ist, die Polarisationsebenen der Antenne (52) innerhalb eines Zeitintervalls zu schalten, das innerhalb eines Drittels einer geschätzten Zeitperiode liegt, die vorläufig festgelegt wird, in der ein Zielfunkfrequenzetikett (14) in einem Kommunikationsfeld verbleibt; und
    einen Kommunikationssteuerabschnitt (76), der dazu konfiguriert ist, zumindest eine Frequenz, ein Modulationssystem, eine Reaktionswartezeit oder eine Befehlsfolge zu steuern, die für die Kommunikation relevant sind, so dass die Kommunikation zusammen mit einer Befehlsgruppe zum Ausführen einer Serie von Kommunikationen mit vielen Funkfrequenzetiketten (14), die als Reaktion auf einen vorbestimmten Auswahlbefehl ausgewählt werden, einschließlich einer Übertragung von Daten zu und einer Aufnahme von Daten von den vielen Funkfrequenzetiketten einmal innerhalb des Zeitintervalls abgeschlossen wird, in dem der Polarisationsebenen-Schaltsteuerabschnitt (78) die Polarisationsebenen der Antenne (52) schaltet.

2. Funkfrequenzetikettenkommunikationsvorrichtung gemäß Anspruch 1, wobei, wenn keine Kommunikation zusammen mit der Befehlsgruppe zum Ausführen der Serien der Kommunikationen mit den vielen Funkfrequenzetiketten (14), die als Reaktion auf den vorbestimmten Auswahlbefehl ausgewählt werden, innerhalb des Zeitintervalls abgeschlossen ist, in dem der Polarisationsebenen-Schaltsteuerabschnitt (78) die Polarisationsebenen der Antenne (52) schaltet, der Kommunikationssteuerabschnitt (76) zumindest die Frequenz, das Modulationssystem, die Reaktionswartezeit oder die Befehlsfolge, die relevant für die Kommunikation sind, bei einer nachfolgenden Kommunikation ändert.

3. Funkfrequenzetikettenkommunikationsvorrichtung gemäß Anspruch 1 oder 2, des Weiteren mit:

    einem Kommunikationszeitbestimmungsabschnitt (80), der dazu konfiguriert ist, zu bestimmen, ob die Kommunikation zusammen mit der Befehlsgruppe zum Ausführen der Serien der Kommunikationen mit den vielen Funkfrequenzetiketten (14), die als Reaktion auf den vorbestimmten Auswahlbefehl ausgewählt werden, in dem Zeitintervall fällt, in dem der Polarisationsebenen-Schaltsteuerabschnitt (78) die Polarisationsebenen der Antenne (52) schaltet, und zwar durch Ändern zumindest der Frequenz, des Modulationssystems, der Reaktionswartezeit oder der Befehlsfolge, die relevant für die Kommunikation sind, wenn keine Kommunikation zusammen mit der Befehlsgruppe zum Ausführen der Serien der Kommunikationen mit den vielen Funkfrequenzetiketten, die als Reaktion auf den vorbestimmten Auswahlbefehl ausgewählt werden, innerhalb des Zeitintervalls abgeschlossen ist, in dem der Polarisationsebenen-Schaltsteuerabschnitt (78) die Polarisationsebenen der Antenne (52) schaltet; und
    einem Alarmabgabesteuerabschnitt (82), der dazu konfiguriert ist, einen Alarm abzugeben, der ein Unvermögen zum Optimieren einer Kommunikationszeit angibt, wenn eine Antwort des Kommunikationszeitbestimmungsabschnitts (80) negativ ist.

4. Funkfrequenzetikettenkommunikationsvorrichtung gemäß Anspruch 1 oder 2, des weiteren mit einem Alarmabgabesteuerabschnitt (82), der dazu konfiguriert ist, einen Alarm abzugeben, der eine Situation angibt, bei der keine Kommunikation zusammen mit der Befehlsgruppe zum Ausführen der Serien der Kommunikationen mit den vielen Funkfrequenzetiketten (14), die als Reaktion auf den vorbestimmten Auswahlbefehl ausgewählt werden, innerhalb des Zeitintervalls nicht abgeschlossen ist, in dem der Polarisationsebenen-Schaltsteuerabschnitt (78) die Polarisationsebenen der Antenne (52) schaltet.

5. Funkfrequenzetikettenkommunikationsvorrichtung gemäß einem der Ansprüche 1 bis 4, wobei der Kommunikationssteuerabschnitt (76) dazu konfiguriert ist, eine Frequenzwechselsteuerung zum Ändern der Frequenz durchzuführen, die bei der Kommunikation mit den Funkfrequenzetiketten (14) in vorbestimmten Zeitintervallen verwendet wird, und wobei der Polarisationsebenen-Schaltsteuerabschnitt (78) dazu konfiguriert ist, die Polarisationsebenen der Antenne (52) jedes Mal dann zu schalten, wenn der Kommunikationssteuerabschnitt (76) die Frequenzwechselsteuerung durchführt.

**Revendications**

1. Dispositif de communication par étiquette radiofréquence (12), comportant une antenne (52) fonctionnant pour commuter des plans de polarisation utilisés dans une communication, et configuré pour exécuter la communication d'informations avec une étiquette radiofréquence (14), comportant la transmission de données à une étiquette radiofréquence (14) et la réception de données à partir de celle-ci, et pour exécuter une commande pour commuter les plans de polarisation de l'antenne pendant la communication, le dispositif de communication par étiquette radiofréquence étant **caractérisé en ce qu'**il comprend :

   une partie (78) de commande de commutation de plans de polarisation configurée pour commuter les plans de polarisation de l'antenne (52) dans un intervalle de temps qui se trouve dans un tiers d'une période estimée préalablement définie où une étiquette radiofréquence ciblée (14) reste dans un champ de communication ; et une partie de commande de communication (76) configurée pour commander au moins l'un(e) d'une fréquence, d'un système de modulation, d'un temps d'attente de réponse et d'un ordre d'instructions relatifs à la communication de sorte que la communication en association avec un groupe d'instructions pour exécuter une série de communications avec une pluralité d'étiquettes radiofréquences (14) sélectionnées en réponse à une instruction de sélection prédéterminée, comportant la transmission de données à ladite pluralité d'étiquettes radiofréquences et la réception de données à partir de celles-ci, soit achevée une fois dans ledit intervalle de temps dans lequel la partie (78) de commande de commutation de plans de polarisation commute les plans de polarisation de l'antenne (52).

2. Dispositif de communication par étiquette radiofréquence selon la revendication 1, dans lequel lorsqu'aucune communication en association avec le groupe d'instructions pour exécuter la série de communications avec la pluralité d'étiquettes radiofréquences (14) sélectionnées en réponse à l'instruction de sélection prédéterminée n'est achevée dans l'intervalle de temps dans lequel la partie (78) de commande de commutation de plans de polarisation commute les plans de polarisation de l'antenne (52), la partie de commande de communication (76) modifie au moins l'un(e) de la fréquence, du système de modulation, du temps d'attente de réponse et de l'ordre d'instructions relatifs à la communication dans une communication ultérieure.

3. Dispositif de communication par étiquette radiofréquence selon la revendication 1 ou 2, comprenant en outre :

   une partie de détermination de temps de communication (80) configurée pour déterminer si la communication en association avec le groupe d'instructions pour exécuter la série de communications avec la pluralité d'étiquettes radiofréquences (14) sélectionnées en réponse à 1"instruction de sélection prédéterminée se trouve dans l'intervalle de temps dans lequel la partie (78) de commande de commutation de plans de polarisation commute les plans de polarisation de l'antenne (52) en modifiant au moins l'un(e) de la fréquence, du système de modulation, du temps d'attente de réponse et de l'ordre d'instructions relatifs à la communication, lorsqu'aucune communication en association avec le groupe d'instructions pour exécuter la série de communications avec la pluralité d'étiquettes radiofréquences sélectionnées en réponse à l'instruction de sélection prédéterminée n'est achevée dans l'intervalle de temps dans lequel la partie (78) de commande de commutation de plans de polarisation commute les plans de polarisation de l'antenne (52) ; et une partie de commande d'émission d'alarme (82) configurée pour émettre une alarme indiquant une incapacité d'optimisation d'un temps de communication lorsqu'une réponse de la partie de détermination de temps de communication (80) est négative.

4. Dispositif de communication par étiquette radiofréquence selon la revendication 1 ou 2, comprenant en outre une partie de commande d'émission d'alarme (82) configurée pour émettre une alarme indiquant une occasion dans laquelle aucune communication en association avec le groupe d'instructions pour exécuter la série de communications avec la pluralité d'étiquettes radiofréquences (14) sélectionnées en réponse à l'instruction de sélection prédéterminée n'est achevée dans l'intervalle de temps dans lequel la partie (78) de commande de commutation de plans de polarisation commute les plans de polarisation de l'antenne (52).

5. Dispositif de communication par étiquette radiofréquence selon l'une quelconque des revendications 1 à 4, dans lequel la partie de commande de communication (76) est configurée pour effectuer une commande de saut de fréquence pour faire varier la fréquence utilisée dans la communication avec les étiquettes radiofréquences (14) à des intervalles de temps prédéterminés, et la partie (78) de commande de commutation de plans de polarisation est configurée pour commuter les plans de polarisation de l'antenne (52), chaque fois que la partie de commande de communication (76) effectue la commande de saut de fréquence.

# FIG.1

10

12

14

Fo

Fr

# FIG.2

16

20

18

ANTENNA PORTION

22
RECTIFYING PORTION

24
POWER SOURCE PORTION

34
RANDOM NUMBER GENERATING PORTION

26
CLOCK EXTRACTING PORTION

32
CONTROL PORTION

28
MEMORY PORTION

30
MODULATING AND DEMODULATING PORTION

# FIG.3

# FIG.4

10 11 12 13 14 15 16 17 18 19 1A 1B 1C 1D 1E 1F

| 10 | CAPACITY OF EPC MEMORY [word LENGTH] | 0 0 | | | 1F |

0 CORRESPONDS TO 1word,
1 CORRESPONDS TO 2word, •••,
11111b CORRESPONDS TO 32word (MAX)

RFU(RESERVATION)

NSI (Numbering System Identifier)

FOR 0, 18 TO 1F CORRESPONDS TO EPC HEADER
FOR 1, 18 TO 1F CORRESPONDS TO AFI (Application Family Identifier)

# FIG.5

READER TRANSMITTING COMMAND

| Select | Query | | ACK | | Query Rep | | Query Rep | Select | |

TAG TRANSMITTING COMMAND

RN16

PC+EPC+CRC16

SERIES OF COMMAND GROUPS FOR READING
ALL TARGETED RADIO-FREQUENCY TAGS

# FIG.6

SR1 — "Select" COMMAND

ST1 — NO REACTION

WITHIN TIME INTERVAL T4

SR2 — "Query" COMMAND

WITHIN TIME INTERVAL T1

ANTI-COLLISION

Yes — COLLISION OCCURRED? SR3

WITHIN TIME INTERVAL T2

WITHIN TIME INTERVAL T2

No

SR4 — Ack + RN16

"QueryRep" OR "QueryAdjust" COMMANDS
(REQUEST RE-ANTI-COLLISION)

WITHIN TIME INTERVAL T1

ST2 — PC, UII, CRC

WITHIN TIME INTERVAL T2

SR6 — "QueryRep" COMMAND

"QueryRep" OR "QueryAdjust" COMMANDS
(REQUEST RE-ANTI-COLLISION)

RADIO-FREQUENCY TAG COMMUNICATION DEVICE

RADIO-FREQUENCY TAG

END

END

# FIG.7

RADIO- FREQUENCY TAG
COMMUNICATION DEVICE

RADIO- FREQUENCY TAG

"Query" OR
"QueryAdjust" COMMANDS
(SET Q-SET VALUE (0~15))

COMMENCE ANTI-
COLLISION PROCESSING

STA1  GENERATE RANDOM NUMBER OF 0~($2^Q$-1) AND
LOAD RESULTING VALUE IN THROTTLE COUNTER

STA2
Yes    THROTTLE
COUNTER = 0 ?
No

STA3
RN16
(RANDOM NUMBER)

END
TO "Ack" WAIT

SRA1  NO REACTION     No
FOR TIME T1 + T3 ?
Yes

END
TO COLLISION CHECK

NO REACTION IN TIME T1 + T3    STA4

SRA2
"QueryRep" OR "QueryAdjust" COMMANDS
(ALTER Q-SET VALUE (0~15))

STA5                           No
QueryAdjust ?
Yes
STA6
THROTTLE COUNTER -1

# FIG.8

POLARIZATION PLANE
SWITCHING CONTROL

SRS1 ― "Select" COMMAND

SRS2

TRANSMIT "Query" OR "QueryRep" COMMANDS
WITH SWITCHING "Q-SET" VALUE AND READ OUT TAG

SRS3 — ISSUE TAG READOUT COMMAND
WITH "Q-SET" VALUE = 0.
NO COLLISION OCCURRED
AND RADIO-FREQUENCY TAG
IS DIFFICULT TO READ ? — No

Yes

SRS4 — CIRCUIT SWITCHING CONTROL

END

# FIG.9

```
        ╭─────────────────────────╮
        │  RADIO-FREQUENCY TAG     │
        │ COMMUNICATION CONTROL    │
        ╰─────────────────────────╯
                    │
   S1     ┌──────────────────────┐
          │   "Select" COMMAND   │
          └──────────────────────┘
                    │
   S2     ┌──────────────────────┐
          │ INPUT 1/2 OF THE NUMBER │
          │   OF ESTIMATED TAGS     │
          │ FIELD TO "Coll_count"   │
          └──────────────────────┘
                    │
   S3     ┌──────────────────────┐
          │  SET "Q-SET" VALUE SUCH │
          │  THAT $2^Q$ IS NOT LESS THAN │
          │ TWICE THE COUNT OF "Coll_count" │
          │     CLOSEST THERETO     │
          └──────────────────────┘
                    │
   S4     ┌──────────────────────┐
          │   Rep_count = $2^Q$    │
          │    Tag_count = 0       │
          │    Coll_count = 0      │
          │    No Tag_count = 0    │
          └──────────────────────┘
                    │
   S5     ┌──────────────────────┐
          │   "Query" COMMAND    │
          └──────────────────────┘
                    │
   S6          ◇ TAG READOUT ◇ ──Yes──→   S7  ┌──────────────┐
               ◇ DETECTED ? ◇              │ Tag_count =  │
                    │ No                   │ Tag_count + 1 │
                    ↓                      └──────────────┘
   S8          ◇ COLLISION ◇ ──Yes──→  S10 ┌──────────────┐
               ◇ DETECTED ? ◇              │ Coll_count = │
                    │ No                   │ Coll_count + 1 │
                    ↓                      └──────────────┘
   S9     ┌──────────────────┐
          │  No Tag_count =  │
          │  No Tag_count + 1 │
          └──────────────────┘
                    │
   S11    ◇ WITH "Q-SET" VALUE = 0 ◇ ──Yes──→ ╭─────────╮
          ◇ NO Tag_count = 1 ?    ◇           │   END   │
                    │ No                      ╰─────────╯
                    ↓
   S12    ┌──────────────────┐
          │   Rep_count =    │
          │  Rep_count - 1   │
          └──────────────────┘
                    │
   S13    ◇ Rep_count = 0 ? ◇ ──Yes──→
                    │ No
                    ↓
   S14    ┌──────────────────────┐
          │  "QueryRep" COMMAND  │
          └──────────────────────┘
```

# FIG.10

IN THIS COMMAND GROUP, SINCE NO RADIO-FREQUENCY TAG EXISTS
IN THE READABLE RANGE UPON ISSUEANCE OF SIGNAL ASSOCIATED
WITH "Select" COMMAND, RADIO-FREQUENCY TAG CAN NOT BE READ OUT.

IN THIS COMMAND GROUP, MOVEMENT OF RADIO-FREQUENCY TAG
MAY BE OUT OF READABLE RANGE IN COURSE OF SERIES
OF COMMAND GROUPS, AND RELIABLY READ OUT THEREOF
IS NOT GUARANTEED.

P1    P2    P3

| VERTICAL POLARIZATION | HORIZONTAL POLARIZATION | VERTICAL POLARIZATION | HORIZONTAL POLARIZATION | VERTICAL POLARIZATION | HORIZONTAL POLARIZATION |
|---|---|---|---|---|---|

TIME IN WHICH RADIO-FREQUENCY TAG
OF VERTICAL POLARIZATION EXITS
IN READABLE RANGE

# FIG.11

IN THIS COMMAND GROUP, SINCE NO RADIO-FREQUENCY TAG EXISTS
IN THE READABLE RANGE UPON ISSUEANCE OF SIGNAL ASSOCIATED
WITH "Select" COMMAND, RADIO-FREQUENCY TAG CAN NOT BE READ OUT.

IN THIS COMMAND GROUP, RADIO-FREQUENCY TAG
CAN BE RELIABLY READ OUT.

P1    P2    P3

| VERTICAL POLARIZATION | HORIZONTAL POLARIZATION | VERTICAL POLARIZATION | HORIZONTAL POLARIZATION | VERTICAL POLARIZATION | HORIZONTAL POLARIZATION |
|---|---|---|---|---|---|

TIME IN WHICH RADIO-FREQUENCY TAG OF VERTICAL
POLARIZATION EXITS IN READABLE RANGE

# FIG.12

ALGORITHM ADJUSTMENT CONTROL

SA1 | $n = 0$

SA2 | START SERIES OF COMMAND GROUPS

SA3 POLARIZATION PLANE SWITCHED ? — Yes

No

SA4 $n \geqq 1$ ? — Yes

END OF CONTROLLING SERIES OF COMMAND GROUPS ? SA6

No

SA5 No

SA7 | $n = n + 1$

Yes

ADJUST PARAMETERS FOR SERIES OF COMMAND GROUPS

# FIG.13

IN THIS COMMAND GROUP, SINCE NO RADIO-FREQUENCY TAG EXISTS IN THE READABLE RANGE UPON ISSUEANCE OF SIGNAL ASSOCIATED WITH "Select" COMMAND, RADIO-FREQUENCY TAG CAN NOT BE READ OUT.

IN THIS COMMAND GROUP, RADIO-FREQUENCY TAG IS NOT GUARANTEED TO BE RELIABLY READ OUT, SINCE COMMAND GROUP TERMINATES HALFWAY.

HOPPING

VERTICAL POLARIZATION

HOPPING P4

P1 P2 P3 P5 P6

| HORIZONTAL POLARIZATION | VERTICAL POLARIZATION | HORIZONTAL POLARIZATION | VERTICAL POLARIZATION | | HORIZONTAL POLARIZATION | VERTICAL POLARIZATION |

VERTICAL POLARIZATION

TIME IN WHICH RADIO-FREQUENCY TAG OF VERTICAL POLARIZATION EXITS IN READABLE RANGE

IN THIS COMMAND GROUP, MOVEMENT OF RADIO-FREQUENCY TAG MAY BE OUT OF READABLE RANGE IN COURSE OF SERIES OF COMMAND GROUPS, AND RELIABLY READ OUT THEREOF IS NOT GUARANTEED.

# FIG.14

IN THIS COMMAND GROUP, SINCE NO RADIO-FREQUENCY TAG EXISTS
IN THE READABLE RANGE UPON ISSUEANCE OF SIGNAL ASSOCIATED
WITH "Select" COMMAND, RADIO-FREQUENCY TAG CAN NOT BE READ OUT.

IN THIS COMMAND GROUP, RADIO-FREQUENCY TAG
CAN BE RELIABLY READ OUT.

| | HOPPING ◇ | P1 | | P2 | | HOPPING ◇ P3 | | |
|---|---|---|---|---|---|---|---|---|
| | HORIZONTAL POLARIZATION | | VERTICAL POLARIZATION | HORIZONTAL POLARIZATION | | VERTICAL POLARIZATION | HORIZONTAL POLARIZATION | |

VERTICAL
POLARIZATION

TIME IN WHICH RADIO-FREQUENCY TAG
OF VERTICAL POLARIZATION EXITS IN READABLE RANGE

# FIG.15

90

94b

94a

# FIG.16

92

94b

94a

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006148472 A
- US 20070279192 A
- US 20050200528 A
- US 20080042846 A